# EUROPÄISCHE PATENTSCHRIFT

(11) **EP 2 585 734 B1**
(45) Veröffentlichungstag und Bekanntmachung des Hinweises auf die Patenterteilung: **25.02.2015**
(21) Anmeldenummer: 11726719.5
(22) Anmeldetag: 21.06.2011
(51) Int. Cl.: F16F 15/08, F16F 1/38

(54) **VORRICHTUNG ZUM ELASTISCHEN LAGERN EINES MOTORS UND VERFAHREN ZUM HERSTELLEN DESSELBEN**
DEVICE FOR ELASTICALLY MOUNTING AN ENGINE AND METHOD FOR PRODUCING SAID MOUNTING
DISPOSITIF DE MONTAGE ÉLASTIQUE D'UN MOTEUR ET PROCÉDÉ DE PRODUCTION

(30) Priorität: 24.06.2010 DE 102010024903
(43) Veröffentlichungstag der Anmeldung: 01.05.2013
(73) Patentinhaber: Anvis Deutschland GmbH, 36396 Steinau an der Strasse (DE)
(72) Erfinder: PICHEL, Heiko, 36396 Steinau (DE)
(74) Vertreter: Schmid, Nils T.F.
(86) Internationale Anmeldenummer: PCT/EP2011/003072
(87) Internationale Veröffentlichungsnummer: WO 2011/160825

(56) Entgegenhaltungen:
- EP-A1- 1 586 789
- DE-A1- 4 234 116
- DE-A1-102005 033 509
- DE-A1-102007 006 709
- DE-B3- 10 249 387

## Beschreibung

Die Erfindung betrifft eine Vorrichtung zum elastischen Lagern eines Motors, insbesondere einer Motorgetriebeeinheit an einer Kraftfahrzeugkarosserie sowie ein Verfahren zum Herstellen einer derartigen Motorlagerung.

Um eine dauerfeste elastische Lagerung für einen Motor bereitzustellen, sind bei der Konstruktion der Motorlagerung sowohl sehr hohe statische Motorgewichtslasten zu tragen sowie auch dynamische Schwinglasten zu dämpfen, die sich aufgrund hochfrequenter Motorbetriebsschwingungen sowie niederfrequenter Fahrbeanspruchungen ergeben.

Ein bekanntes elastisches Lager, wie es beispielsweise in DE 20 2008 000 685 beschrieben ist, hat einen starren Träger, an dem der Motor des Kraftfahrzeugs zu befestigen ist, und einen zum Träger separaten an die Fahrzeugkarosserie starr zu befestigenden Flansch. Der aus einem Metall gebildete Flansch ist in Form einer Brücke gebildet, welche den Träger teilweise in Querrichtung umgreift. Der brücken- oder bogenförmige Flansch erstreckt sich in einer Längsrichtung, die bei der Montage der Motorlagerung der Fahrtrichtung des Fahrzeugs entspricht. Der Träger hat einerseits einen insbesondere frei von oben zugänglichen Montagebereich, an dem der Kraftfahrzeugmotor abgestellt zu befestigen ist, und andererseits einen Abstützabschnitt, der von dem brückenförmigen Flansch umgeben wird und an dem sich der Träger über einen dazwischen angeordneten Elastomerkörper abstützt.

Ein weiteres Lager ist aus der EP 1586789 und der DE10249387 B3 bekannt.

Es ist Aufgabe der Erfindung, die Nachteile des Stands der Technik zu überwinden, insbesondere eine gattungsgemäße Vorrichtung dahingehend weiterzubilden, dass bei zumindest gleich bleibender, vorzugsweise erhöhter, Belastbarkeit der Motorlagerung ein günstigeres und einfaches Herstellungsverfahren herangezogen werden kann.

Diese Aufgabe wird durch die Merkmale des kennzeichnenden Teils von Anspruch 1 gelöst.

Danach ist eine Vorrichtung zum elastischen Lagern eines Motors, insbesondere einer Motorgetriebeeinheit, an einer Kraftfahrzeugkarosserie vorgesehen. Die elastische Lagerung hat einen starren Träger mit einem Stützabschnitt und einem Montageabschnitt, an dem der Motor befestigbar ist. Des Weiteren hat die erfindungsgemäße Vorrichtung einen an die Kraftfahrzeugkarosserie befestigbaren Flanschring, der den Stützabschnitt vollumfänglich umgibt. Ein Federkörper stützt sich sowohl an dem Stützabschnitt als auch an der Innenseite des Flansches elastisch ab, um eine federnde Dämpfungsbewegung zwischen dem Träger und dem Flanschring zuzulassen.

Bei der Erfindung ist die Einlage ohne jegliches chemisches Haftmittel oder Vulkanisationsschritt an deren Flanschringseite und/oder an deren Trägerseite insbesondere mittels einer mechanischen Widerhakenstruktur an dem Flanschring und/oder dem Träger befestigt.

Vorzugsweise ist die Widerhakenstruktur durch wenigstens einen Vorsprung mit einem Hinterschnitt insbesondere an der Flanschringseite und/oder an der Trägerseite der Einlage sowie durch wenigstens eine zu dem jeweiligen wenigstens einen Vorsprung im Wesentlichen formkomplementäre Vertiefung mit einer Verjüngung in dem Flanschring und/oder dem Träger realisiert, wobei vorzugsweise die Vertiefung an der der Einlage zugewandten Seite des Flanschrings und/oder des Trägers ausgebildet ist. Zur Realisierung der mechanischen Widerhakenstruktur greift der wenigstens eine Vorsprung in die wenigstens eine Vertiefung ein.

Die mechanische Widerhakenstruktur realisiert eine kraftschlüssige unverrückbare Kopplung zwischen der Einlage und dem Flanschring und/oder dem Träger, so dass hierfür keine Haftmittelkopplung bzw. Vulkanisation verwendet werden muss.

Es zeigte sich, dass durch die Ausbildung eines vollumfänglichen Flanschrings, der insbesondere aus einem Stück gefertigt ist, die Bauhöhe und somit das dafür benötigte Material zur Realisierung des Flanschringes deutlich gegenüber dem bekannten Brückenkonzept reduziert werden können. Somit können Kosteneinsparungen erreicht werden, sobald hohe Stückzahlen für die Motorlagerungen notwendig sind. Gerade aufgrund der geringen Bauhöhe kann der erfindungsgemäß entstehende Freiraum für weitere Komponenten innerhalb des räumlich sehr begrenzten Motorraums anderweitig genutzt werden.

Bei einer Weiterbildung der Erfindung bildet der Flanschring eine vollständig geschlossene Ringstruktur, die insbesondere innenwandseitig kreisförmig oder zylindrisch geformt ist.

Bei einer bevorzugten Ausführung der Erfindung ist der Flanschring aus einem insbesondere faserverstärkten Kunststoffstück gefertigt, insbesondere gespritzt. Gerade mit dieser Maßnahme kann nicht nur die Bauhöhe weiter verringert werden, sondern auch das Gewicht sowie die Masse des Flanschrings können zusätzlich deutlich reduziert werden, ohne die Festigkeit des Flanschrings zu beeinträchtigen. Im Gegenteil zeigt es sich, dass durch die Kombination einer Ringstruktur und der Fertigung aus Kunststoff ein hochfester Flanschring realisiert werden konnte. Vorzugweise soll für den faserverstärkten Kunststoff ein Kunststoff mit einem erhöhten Faseranteil insbesondere Glasfaseranteil von insbesondere mehr als 35 Prozent und höchstens 60 Prozent, vorzugsweise 45 Prozent bis 55 Prozent verwendet werden, wie er beispielsweise unter der Markenbezeichnung Ultramid® von BASF vertrieben wird.

Bei einer bevorzugten Ausführung der Erfindung wird eine kraftschlüssige Befestigung des Federkörpers an dem Flanschring und/oder an dem Träger ohne eine Metallzwischenlage realisiert, also ohne die Verwendung eines Metallmaterials. Damit wird nicht nur deutlich an dem Gewicht der Motorlagerung gespart, sondern auch an den Herstellungskosten, weil Metallbauteile in Kombination mit Elastomerfedern stets fertigungstechnische Maßnahmen erfordern, die kostenintensiv sind. Beispielsweise kann auf eine Vulkanisation unter Mithilfe eines Haftmittels verzichtet werden.

Bei einer bevorzugten Ausführung der Erfindung ist auch der Träger aus einem Kunststoff gebildet. Geeignete Kunststoffe sind beispielsweise der unter der Markenbezeichnung Vestoran® von Degussa vertriebene Polyphenyläther oder Polyamide 6 bzw. 6.6, wie sie als Technyl® von Rhodia, Radilon® von Radici, Durethan® von Lanxess und Latamid® von Lati vertrieben werden.

Um eine kraftschlüssige Befestigung des Federkörpers an dem Flanschring und/oder an dem Stützabschnitt des Träger zu realisieren, kann der Federkörper an der Innenseite des Flanschrings und/oder an der Außenseite des Stützabschnitts angespritzt oder umgespritzt sein, wobei hierzu durchaus ein Vulkanisationsschritt herangezogen werden kann, wobei vorzugsweise eine Elastomer-Kunststoff-Materialkombination herangezogen wird, bei der sich Hafteffekte an den Grenzflächen ohne den Einsatz zusätzlicher Haftvermittlungssysteme einstellen können.

Vorzugsweise wird in einem ersten Verfahrensschritt eine zusammenhängende Fertigungszwischeneinheit bestehend aus dem Träger und dem Federkörper gebildet, wobei in einem zweiten Verfahrensschritt diese Fertigungszwischeneinheit mit dem Flanschring fest gekoppelt wird.

Um den zweiten Kopplungsschritt zu realisieren, soll keine Haftvermittlung und/oder Vulkanisation verwendet werden, sondern eine metallfreie Einlage insbesondere aus Kunststoff.

Bei einer bevorzugten Ausführung der Erfindung ist für eine kraftschlüssige Befestigung von dem Elastomerkörper und dem Träger und/oder dem Flansch eine starre Einlage flanschringseitig und/oder trägerseitig an dem Federkörper befestigt, um eine Vulkanisation in diesem Bereich, zumindest was den Flanschring oder den Träger betrifft, zu vermeiden.

Die starre Einlage ist vorzugsweise aus Kunststoff gebildet. Um die Einlage an dem Federkörper zu befestigen, um somit eine Montagezwischeneinheit bestehend aus dem Träger, dem Elastomerkörper und der Einlage zu bilden, kann der Federkörper flanschringseitig und/oder trägerseitig an der starren Einlage insbesondere unter Ausnützung von Vulkanisation angespritzt sein.

Bei einer Weiterbildung der Erfindung ist der wenigstens eine Vorsprung ein aus einem Stück mit der Einlage gefertigten Steg, der sich vorzugsweise axial bezüglich der Ringachse des Flanschrings im Wesentlichen geradlinig erstreckt. Des Weiteren kann der Steg im Querschnitt einen Hinterschnitt aufweisen, aufgrund dessen eine Widerhakenfunktion mit der Verjüngung der Vertiefung in dem Träger und/oder dem Flanschring erzielt wird. Der Steg kann sich im Wesentlichen über die gesamte axiale Breite der Einlage erstrecken.

Bei einer bevorzugten Ausführung der Erfindung hat die mechanische Widerhakenstruktur zusätzlich einen Ringvorsprung, der sich in Umfangsrichtung des Flanschrings erstreckt und ebenfalls einstückig mit der Einlage ausgebildet sein kann. Der Ringvorsprung verbindet die Stege strukturell miteinander, so dass eine zusammenhängende Struktur aus Steg und Ringvorsprung gebildet ist. Des Weiteren kann der Ringvorsprung im Wesentlichen in einer axialen Mitte des Flanschrings insbesondere senkrecht zu den Stegen angeordnet sein. Der Ringvorsprung kann ohne Hinterschnitt ausgebildet sein.

Bei einer Weiterbildung der Erfindung ist zwischen den sich im Wesentlichen in Axialrichtung erstreckenden Vertiefungen, die in dem Flanschring sowie dem Träger zur Bildung der Widerhakenstruktur ausgebildet sein können, jeweils eine insbesondere kanalförmige Materialaussparung ausgebildet, die sich vorzugsweise im Wesentlichen parallel zur axialen Richtung erstrecken.

Bei einer bevorzugten Ausführung der Erfindung sind Materialaussparungen am Umfang des Ringflansches angeordnet, um weiter das Gewicht der Motorlagerung zu verringern. Die Materialaussparungen am Umfang des Ringflansches sind voneinander im Wesentlichen dünne durch Wandstege getrennt. Die Wandstege sowie auch die Materialaussparungen erstrecken sich in axialer Richtung. Dabei bleibt die Wandstärke des Wandstegs über die lichte Weite der Materialaussparungen konstant. Die Wandstärke eines Wandstegs kann vorzugsweise kleiner als eine lichte Weite der dazu benachbarten Materialaussparungen sein.

Bei einer Weiterbildung der Erfindung ist die Einlage, die vorzugsweise aus Kunststoff gebildet ist, eine insbesondere kreisabschnittsförmige Bogenplatte und eine Ringabschnittsform. Die Ringabschnittsform hat eine Umfangserstreckung von weniger als 180°, vorzugsweise mehr als 90°.

Da die Einlage aus Kunststoff gebildet sein kann, kann die Einlage von dem Flanschring aus Kunststoff und/oder dem Träger aus Kunststoff umspritzt sein. Vorzugsweise ist die Einlage sowie der Flanschring und/oder der Träger durch ein Zwei-Komponenten-Spritzgießverfahren hergestellt.

Bei einer bevorzugten Ausführung der Erfindung ist der Federkörper durch eine Anordnung von wenigstens zwei Federarmen gebildet, die insbesondere sich im eingebauten Zustand der Vorrichtung in einer V-Anordnung von einem Träger hin zur Innenseite des Flanschrings im Wesentlichen achsensymmetrisch zu einer Vertikalachse erstrecken. Die Vertikalachse kann vorzugsweise durch einen Kreismittelpunkt verlaufen, der durch die im Wesentlichen kreisförmige Innenseite des Flanschrings definiert ist.

Bei einer bevorzugten Ausführung der Erfindung hat die Anordnung des Federkörpers zusätzlich wenigstens einen Federanschlag. Wenigstens ein Federanschlag kann zwischen den beiden Federarmen im Spitzwinkelraum und/oder im Überstumpfwinkelraum der V-Anordnung vorgesehen sein.

Bei einer bevorzugten Ausführung der Erfindung ist die Anordnung des Federkörpers aus einem einzigen Elastomerstück gefertigt, insbesondere gespritzt.

Bei einer Weiterbildung der Erfindung erstrecken sich die wenigstens zwei Federarme jeweils im Wesentlichen lotrecht von einer im Wesentlichen planen Abstützfläche des Stützabschnitts des Trägers weg. Die beiden Abstützflächen können jeweils zur Vertikalachse in einem gleichen Neigungswinkel liegen. Vorzugsweise bilden die wenigstens zwei Federarme eine radiale Haupterstreckungsrichtung, deren insbesondere gedachte Kreuzungsstelle im Bereich eines Kreismittelpunkts liegt, insbesondere damit zusammen fällt, der durch die im Wesentlichen kreisringförmige Innenseite des Flanschrings definiert sein kann.

Des Weiteren betrifft die Erfindung ein Verfahren zum Herstellen einer insbesondere erfindungsgemäßen Vorrichtung zum elastischen Lagern eines Motors, insbesondere einer Motorgetriebeeinheit, an einer Kraftfahrzeugkarosserie. Erfindungsgemäß werden der Träger und der Flanschring aus einem Kunststoff gefertigt, ohne eine Metallzwischenlage zwischen dem Träger und/oder dem Flanschring sowie dem Federkörper anzuordnen.

Weitere Eigenschaften, Vorteile und Merkmale der Erfindung werden durch die vorliegende Beschreibung einer bevorzugten Ausführung der Erfindung anhand der beiliegenden Zeichnungen deutlich, in denen zeigen:
- Figur 1: eine perspektivische Ansicht einer erfindungsgemäßen Vorrichtung; und
- Figur 2: eine perspektivische Teilexplosionsansicht der erfindungsgemäßen Vorrichtung nach Figur 1.

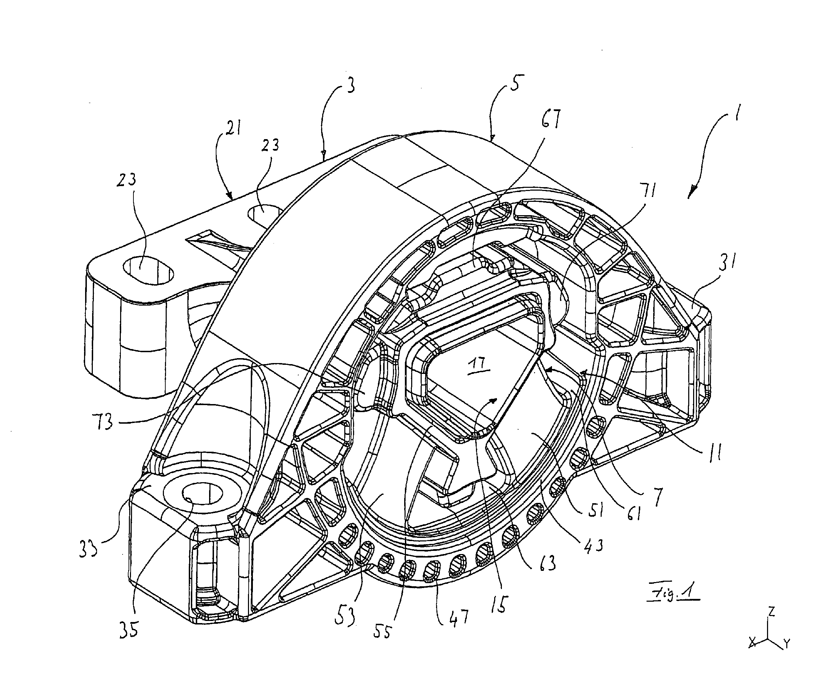

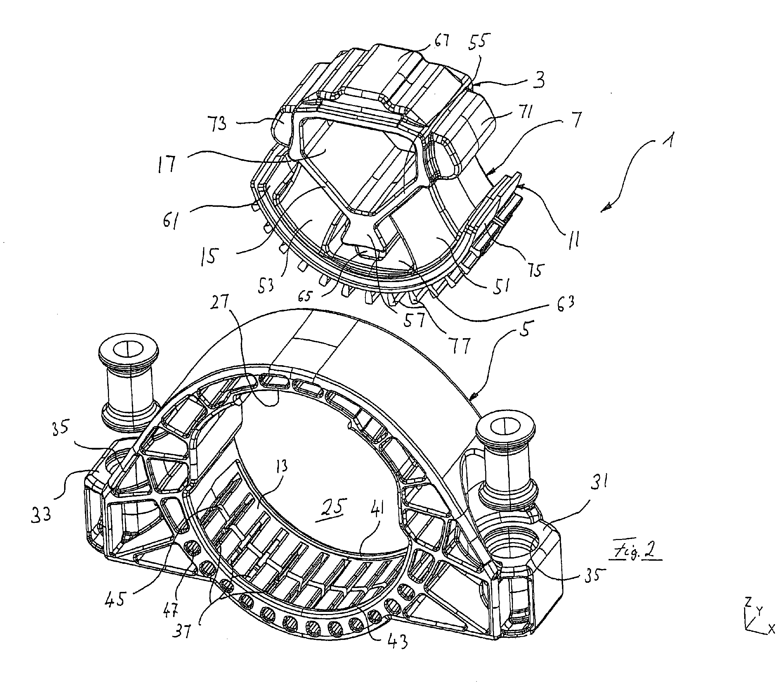

In den Figuren 1 und 2 ist ein erfindungsgemäßes Motorlager im Allgemeinen mit der Bezugsziffer 1 versehen. Das Motorlager 1 hat im Wesentlichen vier Hauptbestandteile, nämlich einen Träger 3, der nur teilweise dargestellt ist, einen Flanschring 5, der den Träger 3 zumindest teilweise vollumfänglich umgibt, eine Federkörperanordnung 7, die zumindest zwei Federarme in einer V-Anordnung umfasst, und eine ringabschnittsförmige Einlage 11, die zwischen einer Innenseite 13 des Flanschrings 5 und einer dem Flanschring zugewandten Kopplungsseite der Elastomerkörperanordnung 7 zu montieren, was in Figur 1 ersichtlich ist.

Der Träger 3 umfasst einen Stützabschnitt 15, der im Querschnitt im Wesentlichen dreieckig geformt ist und eine Aufnahme 17 durch ein Hohlprofil bildet. Die lichte Weite der Aufnahme 17 ist in einer Axialrichtung Y im Wesentlichen konstant, so dass die Aufnahme 17 einen bei Draufsicht (in Z-Richtung) T-förmigen Montageabschnitt 21 des Trägers 3 aufnehmen kann. Ein Langschenkel (nicht näher dargestellt) des Montageabschnitts 21 ist formkomplementär in der Aufnahme 17 eingepresst, um eine starre Struktur für den Träger 3 zu bilden. Es sei klar, dass der Montageabschnitt und der Stützabschnitt auch aus einem Stück gefertigt sind.

Wie in Figur 1 ersichtlich ist, ist im Kurzschenkelbereich des T-förmigen Montageabschnitts mehrere Durchgangslöcher 23 zum Befestigen der nicht dargestellten Motoreinheit des Kraftfahrzeugs vorgesehen. Üblicherweise ist die Motorlagerung 1 derart in einem Kraftfahrzeug angeordnet und montiert, dass die Achse Z, die eine Mittelachse für den Flanschring 5 und/oder eine Längsachse für den Träger 3 bildet, senkrecht zu Fahrtrichtung liegt. Auch andere Einbaupositionen können abhängig von der Drehmomentabtriebsrichtung des Motors vorgesehen sein.

Der Träger 3 ist derart dimensioniert, dass der Stützabschnitt 15 vollständig von dem Flanschring 5 umgeben ist, wobei sich der Montageabschnitt aus dem Flanschring in Y-Richtung herausstreckt, so dass der für die Montage des Motors notwendige Bereich vollständig außerhalb des Flanschrings 5 in Y-Richtung liegt.

Der Träger 3 kann aus einem Kunststoff gefertigt, insbesondere gespritzt sein.

Der Flansch 5 definiert einen in Umfangsrichtung begrenzten Ringraum 25, der in X- und in Z-Richtung durch eine im Wesentlichen kreisringförmige Innenwand 27 begrenzt ist.

Der Flanschring 5 hat seitlich in X-Richtung vorstehende Montageverstärkungen 31, 33 mit einem Montageloch 35, über die der Flanschring 5 und somit das Motorlager 1 an ein nicht dargestelltes Karosserieteil des Kraftfahrzeugs befestigt werden kann.

Wie in den Figuren 1 und 2 ersichtlich ist, ist die Struktur des Flanschringes 5 in Form einer Fachwerkstruktur ausgeführt mit einer Vielzahl von Materialaussparungen, die sich sämtlich in Axialrichtung Y erstrecken. Die Materialaussparungen sind durch dünnwandige Stege voneinander getrennt, wobei die Stärke der Stege deutlich kleiner als die lichte Weite der Materialaussparungen ist.

Wie in Figur 2 ersichtlich ist, sind an der im Wesentlichen kreisringförmigen Innenwand 27 des Flanschrings 5 eine Vielzahl von geradlinigen Vertiefungen 37 vorgesehen, die sich im Wesentlichen über die gesamte, im Wesentlichen konstante Breite (in Y-Richtung) des Flanschrings 5 erstrecken. Sämtliche Vertiefungen 37 sind am axialen Randbereich 41, 43 der Innenwand 27 begrenzt und geschlossen. Hin zum Raum 25 sind die Vertiefungen 37 offen.

Jede der Vertiefungen 37 ist mit einer nicht näher dargestellten Verjüngung ausgeführt, d.h. die lichte Breite der Vertiefung 37 nimmt von der Seite der Innenwand 27 radial nach außen zu.

Im Wesentlichen in der Mitte der axialen Breite (in Y-Richtung) des in der Innenwandseite im Bereich der Anordnung der Vertiefungen 37 ist ein sich teilumfänglich erstreckender Verbindungskanal 45 vorgesehen, der die Vertiefungen 37 miteinander verbindet. Der Vertiefungskanal ist mit einer konstanten Breite ausgeführt, also verjüngungsfrei.

Bei Betrachtung des Motorlagers 1, insbesondere des Flanschrings 5, in Y-Richtung kann festgestellt werden, dass sich die Anordnung der Vertiefungen 37 von einer etwa 4-Uhr-Position hin zu einer 8-Uhr-Position erstreckt. Die Vertiefungen 37 sind ein äquidistanten Abständen voneinander angeordnet. Die Dimensionierung der Vertiefungen 37 ist für jede der Vertiefung gleich.

Wie in Figur 2 ersichtlich ist, liegt im Zwischenrandbereich zweier benachbarter Vertiefungen eine sich axial (in Y-Richtung) erstreckende Materialaussparung 47, die im Wesentlichen zwischen zwei Vertiefungen gleich groß ist.

Die Federkörperanordnung 7 ist in einem ersten Verfahrensschritt an dem Träger 3, insbesondere dem Stützabschnitt 15 befestigt, ohne ein Vulkanisationsverfahren, insbesondere gemischte Haftmittel zu verwenden. Die Anbringung der Federkörperanordnung 7 an dem Träger 3 kann mittels Umspritzung realisiert werden. Dabei wird die gesamte Elastomerfederanordnung in einem Stück gefertigt.

Die Federkörperanordnung 7 umfasst als Hauptbestandmerkmale zwei Federarme 51, 53, die sich von zwei winklig zueinander angeordneten Stützarmen 55 des Stützabschnitts 15 annährend senkrecht weg erstrecken. Die Stützarme 55 sind in einer Y-Form zueinander angeordnet, wobei eine verstärkte Basis 57 die Stützarme miteinander verbindet. Der zwischen den Stützarmen 55 gebildete Winkel ist größer als 90°.

Die Stützarme 55 sowie die Federarme 51, 53 sind achsensymmetrisch zu einer Symmetrieachse oder Symmetrieebene gebildet, die sich in Z-Richtung erstreckt. Die Federarme 51, 53 sind in einem direkten Kontakt mit dem Stützabschnitt 15 des Trägers 3 sowie in einem direkten Kontakt mit einer Innenseite 61 der Einlagen 11. Die Federarme 51, 53 dienen dazu, dynamische und statische Lasten, die auf den Träger 3 wirken, federnd auf den Flanschring zu übertragen und in entgegen gesetzter Richtung.

Wie in Figur 2 ersichtlich ist, ist die Breite und Tiefe (in X-Richtung) der Federarme 51 ,53 im Wesentlichen konstant. Lediglich an den Anbindungsenden ist eine leichte Verstärkung der Federarme 51, 53 für einen guten Krafteintrag vorgesehen.

Des Weiteren umfasst die Federkörperanordnung 7 mehrere Anschläge.

Ein erster Z-Anschlag 65, der eine Bewegungsamplitude in Z-Richtung nach unten begrenzt, ist im Kleinraum 63, der von den beiden Federarmen 51, 53 begrenzt ist, und an dem Basisschenkel der Y-Form der Stützarme 55 angeordnet. Ein weiterer Z-Anschlag ist an der diametral gegenüberliegenden Stelle des Stützabschnitts 15 vorgesehen und mit der Bezugsziffer 67 vorsehen.

An den symmetrischen Positionen (symmetrisch zur Z-Ebene) sind zwei weitere Seitenanschläge 71, 73 vorgesehen, welche eine Bewegungsamplitudenbegrenzung in X-Richtung definieren.

Wie oben bereits erwähnt, sei klar, dass sämtliche Federelemente, wie die Federarme 51 ,53 sowie die Anschläge 65, 76, 71, 73 aus ein- und demselben Elastomerwerkstoff aus einem Bewegungsschritt gespritzt sind.

Die Einlage 11, die sich sowie die Anordnungen der Vertiefungen 37 von einer 4-Uhr-Position zu einer 8-Uhr-Position kreisringförmig erstreckt, hat eine gebogene Plattenform mit konstanter Breite in Y-Richtung.

An einer radialen Außenseite 75 der Einlage 11 sind mehrere Vorsprünge 77 vorgesehen, die sich geradlinig in Axialrichtung (Z-Richtung) erstrecken und einen konstanten Querschnitt im Verlauf der Y-Richtung aufweist. Der Querschnitt des Vorsprungs 77 ist durch beidseitige Querschnitte festgelegt. Der Vorsprung hat einen symmetrischen Aufbau. Die Anzahl der Vorsprünge 77 ist auf die Anzahl der Vertiefungen 37 abgestimmt. Die Außendimensionierung der Vorsprünge 77 ist formkomplementär an die Innenabmessung der Vertiefungen 37 angepasst, so dass im Eingriff der Vorsprünge 77 in die Vertiefungen 37 eine Verhakung des Einlegeteils 11 mit dem Flanschring 5 einhergeht.

Um diesen Verhakungsmechanismus zu realisieren, kann, nachdem die Einheit bestehend aus dem Träger 3, der Elastomerfederanordnung 7 sowie dem Einlegeteil 11 hergestellt worden ist, der Flanschring um die in eine Spritzform eingelegte Einheit gespritzt werden. Auf diese Weise können die Verjüngungen bei den Vertiefungen 37 sowie die Hinterschnitte bei den Vorsprüngen 77 realisiert werden. Durch das Umspritzen wird ein spielfreier Anschluss des Flanschrings an das Einlegeteil 11 gewährleistet. Damit können unerwünschte Lagergeräusche vermieden werden, die bei bekannten Lagern zwischen aneinander gefügten Lagerteilen aufgrund von Fertigungstoleranzen auftreten.

Mit dem erfindungsgemäßen Motorlager ist es möglich, eine hoch belastbare Lagerung zu realisieren, wobei vollständig auf jegliche Verbindung, wie Vulkanisation und ein Einsatz von Haftmitteln verzichtet werden kann. Insofern müssen keine prozessspezifischen Maßnahmen hinsichtlich derartiger chemischer Verbindungen, wie Sauberkeitsgrade, Zeitvorgaben und Werkstoffkombinationen aufgrund von Haftvermittlungsmunitionen (primer) berücksichtigt werden. Vorzugsweise wird für den Flanschring ein faserverstärkter Kunststoff eingesetzt, wobei für das Einlegeteil 11 ein entsprechender Kunststoff eingesetzt wird. Für den Elastomerfederkörper kann natürlich Kautschuk und andere Gummiarten eingesetzt werden.

Aufgrund der Tatsache, dass das erfindungsgemäße Motorlager im Wesentlichen metallbauteilfrei ist, können wesentlich leichtgewichtigere Lagerungstypen erzielt werden. Als ein besonderer Vorteil ist angesehen, dass bei der Erfindung das Herstellungsverfahren eines Zweikomponentenspritzgießverfahrens ermöglicht ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Motorlager
- 3: Träger
- 5: Flanschring
- 7: Federkörperanordnung
- 11: Einlage
- 13: Innenseite
- 15: Stützabschnitt
- 17: Aufnahme
- 21: T-förmiger Montageabschnitt
- 23: Durchgangslöcher
- 25: Ringraum
- 27: kreisringförmige Innenwand
- 31, 33: Montageverstärkungen
- 35: Montageloch
- 37: Vertiefungen
- 41, 43: axialer Randbereich
- 45: Verbindungskanal
- 47: Materialaussparungen
- 51, 53: Federarme
- 55: Stützarmee
- 57: Basis
- 61: Innenseite
- 63: Kleinraum
- 65, 67: Z-Anschlag
- 71, 73: Seitenanschläge
- 75: Außenseite
- 77: Vorsprünge
- Y: Axialrichtung
- Z: Achse

## Patentansprüche

1. Vorrichtung zum elastischen Lagern eines Motors, insbesondere einer Motorgetriebeeinheit, an einer Kraftfahrzeugkarosserie, umfassend einen starren Träger (3) mit einem Stützabschnitt (15) und einem Montageabschnitt (21), an dem der Motor befestigbar ist, einen an die Kraftfahrzeugkarosserie befestigbaren, starren Flanschring (5), der den Stützabschnitt (15) vollumfänglich umgibt, und einen Federkörper (7), der sich an dem Stützabschnitt (15) des Trägers (3) und an einer Innenseite des Flanschrings (5) elastisch abstützt, wobei für eine kraftschlüssige Befestigung des Federkörpers (7) an dem Flanschring (5) und/oder dem Stützabschnitt (15) eine starre Einlage (11) flanschringseitig und/oder trägerseitig an dem Federkörper (7) befestigt ist, **dadurch gekennzeichnet, daß** die Einlage (11) an deren Flanschringseite und/oder an deren Trägerseite mittels einer Widerhakenstruktur an dem Flanschring (5) und/oder an dem Träger (3) befestigt ist, wobei die Widerhakenstruktur durch wenigstens einen Vorsprung (77) mit einem Hinterschnitt an der Flanschringseite und/oder an der Trägerseite und durch wenigstens eine zu dem jeweiligen wenigstens einen Vorsprung (77) im wesentlichen formkomplementäre Vertiefung (37) mit einer Verjüngung realisiert ist, wobei der wenigstens eine Vorsprung (77) widerhakend in die wenigstens eine Vertiefung (37) eingreift.

2. Vorrichtung nach Anspruch 1, **dadurch gekennzeichnet, daß** der Flanschring (5) eine vollständig geschlossene Ringstruktur bildet und/oder der Flanschring (5) aus einem insbesondere faserverstärkten Kunststoffstück gefertigt, insbesondere gespritzt, ist.

3. Vorrichtung nach Anspruch 1 oder 2, **dadurch gekennzeichnet, daß** die kraftschlüssige Befestigung des Federkörpers (7) an dem Flanschring (5) und/oder an dem Träger (3) ohne eine Metallzwischenlage realisiert ist.

4. Vorrichtung nach einem der vorstehenden Ansprüche, **dadurch gekennzeichnet, daß** die starre Einlage (11) flanschringseitig und/oder trägerseitig an dem Federkörper (7) insbesondere bei Vulkanisation angespritzt ist, wobei insbesondere die Einlage (11) haftmittelfrei an dem Flanschring (5) und/oder an dem Träger (3) befestigt ist.

5. Vorrichtung nach einem der Ansprüche 1 bis 4, **dadurch gekennzeichnet, daß** der wenigstens eine Vorsprung (77) ein aus einem Stück mit der Einlage (11) gefertigter Steg ist, der sich axial bezüglich der Ringachse des Flanschrings (5) im wesentlichen geradlinig erstreckt und/oder im Querschnitt einen Hinterschnitt aufweist und/oder sich im wesentlichen über die gesamte axiale Breite der Einlage (11) erstreckt, und/oder die Widerhakenstruktur zusätzlich einen Ringvorsprung aufweist, der die Stege miteinander verbindet und/oder im wesentlichen in einer axialen Mitte des Flanschrings (5) insbesondere senkrecht zu den Stegen angeordnet ist und/oder ohne Hinterschnitt geformt ist und/oder aus einem Stück mit der Einlage (11) gefertigt ist.

6. Vorrichtung einem der Ansprüche 1 bis 5, **dadurch gekennzeichnet, daß** zwischen den sich im wesentlichen in axialer Richtung erstreckenden Vertiefungen (37) jeweils eine Materialaussparung (47) ausgebildet ist, die sich im wesentlichen in axialer Richtung erstrecken, und/oder Materialaussparungen (47) am gesamten Umfang des Ringflansch angeordnet sind und von einander durch im wesentlichen dünne Wandstege von einander getrennt sind, die sich mit gleichbleibender Wandstärke in axialer Richtung erstrecken, wobei die Wandstärke eines Wandstegs kleiner als eine lichte Weite der dazu benachbarten Materialaussparungen (47) ist.

7. Vorrichtung nach einem der Ansprüche 1 bis 6, **dadurch gekennzeichnet, daß** die Einlage (11) eine insbesondere kreisförmige Ringabschnittsform bildet, die eine Umfangserstreckung von weniger als 180°, vorzugsweise mehr als 90°, aufweist und/oder die Einlage (11) aus Kunststoff gebildet ist und/oder die Einlage (11) von dem Flanschring (5) aus Kunststoff und/oder von dem Träger (3) umspritzt ist und/oder die Einlage (11) sowie der Flanschring (5) durch ein Zwei-Komponenten-Spritzgießverfahren hergestellt sind.

8. Vorrichtung nach einem der vorstehenden Ansprüche, **dadurch gekennzeichnet, daß** der Federkörper (7) durch eine Anordnung von wenigstens zwei Federarmen (51, 53) gebildet ist, die insbesondere sich im eingebauten Zustand der Vorrichtung in einer V-Anordnung von dem Träger (3) hin zur Innenseite des Flanschrings (5) im wesentlichen achsensymmetrisch zu einer Vertikalachse erstrecken, die vorzugsweise durch einen Kreismittelpunkt verläuft, der durch die im wesentlichen kreisringförmige Innenseite des Flanschrings (5) definiert ist, wobei insbesondere die Anordnung des Federkörpers (7) zusätzlichen wenigstens einen Federanschlag aufweist, wobei vorzugsweise wenigstens ein Federanschlag zwischen den beiden Federarmen (51, 53) im Spitzwinkelraum und/oder im Überstumpfwinkelraum vorgesehen sind, und/oder die Anordnung des Federkörpers (7) aus einem Elastomerstück gefertigt ist.

9. Vorrichtung nach Anspruch 8, **dadurch gekennzeichnet, daß** sich die wenigstens zwei Federarme (51, 53) jeweils im wesentlichen lotrecht von einer im wesentlichen planen Abstützfläche des Stützabschnitts (15) weg erstrecken, wobei insbesondere die beiden Abstützflächen jeweils zur Vertikalachse in einem gleichen Neigungswinkel liegen, und/oder die wenigstens zwei Federarme (51, 53) eine radiale Haupterstreckungsrichtung bilden, deren insbesondere gedachte Kreuzungsstelle im Bereich eines Kreismittelpunkts liegt, insbesondere damit zusammenfällt, der durch die im wesentlichen kreisringförmige Innenseite des Flanschrings (5) definiert ist.

10. Verfahren zum Herstellen einer nach einem der vorstehenden Ansprüche gebildeten Vorrichtung zum elastischen Lagern eines Motors, insbesondere einer Motorgetriebeeinheit, an einer Kraftfahrzeugkarosserie, **dadurch gekennzeichnet, daß** die Vorrichtung umfasst: einen Träger (3), an dem der Motor befestigbar ist, einen an die Kraftfahrzeugkarosserie befestigbaren, starren Flanschring (5) und einen Federkörper (7), der sich an dem Träger (3) und einer Innenseite des Flanschrings (5) elastisch abstützt, wobei der Träger (3) und der Flanschring (5) aus einem Kunststoff gefertigt werden, ohne eine Metallzwischenlage zwischen dem Träger (3) und/oder dem Flanschring (5) sowie dem Federkörper (7) anzuordnen.

## Claims

1. Device for elastically mounting an engine, in particular an engine-gearbox-unit, to a motor vehicle body, comprising a rigid carrier (3) having a support section (15) and an assembly section (21) to which carrier (3) the engine is attachable, a rigid flange ring (5) attachable to the motor vehicle body, the flange ring (5) fully circumferentially surrounding the support section (15), and a spring body (7) which supports itself elastically on the support section (15) of the carrier (3) and on an inside of the flange ring (5), wherein a rigid insert (11) is attached to the spring body (7) on the flange ring side and/or on the carrier side for an force-fitting attachment of the spring body (7) to the flange ring (5) and/or to the support section (15),
**characterized in that**
the insert (11) is attached to the flange ring (5) and/or to the carrier (3) by means of a barbed-hook-structure on the flange-ring-side and/or on the carrier-side of the insert (11), wherein the barbed-hook-structure is realized by means of at least one projection (77) with an undercut on the flange ring side, and/or the carrier side and by at least one recess (37) having a tapering which recess (37) is essentially complementary in shape with regard to each respective at least one projection (77), wherein the at least one projection (77) engages the at least one recess (37) in a barbed-hook-manner.

2. Device according to claim 1, **characterized in that** the flange ring (5) forms a fully closed annular structure and/or **in that** the flange ring (5) is made from a in particular fiber reinforced plastic piece, in particular injected.

3. Device according to claim 1 or 2, **characterized in that** the force-fitting attachment of the spring body (7) to the flange ring (5) and/or to the carrier (3) is realized without an intermediate metal layer.

4. Device according to one of the aforementioned claims, **characterized in that** the rigid insert (11) is injected onto the spring body (7) on the flange ring side and/or on the carrier side particularly during vulcanization, wherein in particular the insert (11) is attached without an adhesive agent to the flange ring (5) and/or to the carrier (3).

5. Device according to one of the claims 1 through 4, **characterized in that** the at least one projection (77) is a bridge made of one piece together with the insert (11), the bridge extending essentially rectilinearly and axially with respect to the ring-axis of the flange ring (5) and/or having an undercut in cross section and/or extending essentially over the entire axial width of the insert (11), and/or **in that** the barbed-hook-structure additionally includes a ring-projection connecting the bridges with one another and/or being arranged essentially in an axial center of the flange ring (5) in particular with respect to the bridges and/or being shaped without undercuts and/or being made of one piece together with the insert (11).

6. Device according to one of the claims 1 through 5, **characterized in that** one respective material opening (47) is formed between the recesses (37) which extend essentially in the axial direction, the material openings (47) extending essentially in axial direction, and/or material openings (47) being arranged at the entire circumference of the ring flange and being separated from one another through essentially thin wall-bridges, which extend with a constant wall thickness in the axial direction, wherein the wall thickness of a wall-bridge is smaller than a clearance of the respective adjacent material opening (47).

7. Device according to one of the claims 1 through 6, **characterized in that** the insert (11) forms an in particular circular ring section shape having a circumferential extension of less than 180°, preferably more than 90°, and/or **in that** the insert (11) is made from plastics and/or **in that** the insert (11) is over-molded by the flange ring (5) of plastics and/or by the carrier (3) and/or **in that** the insert (11) as well as the flange ring (5) is manufactured in a two-component injection molding process.

8. Device according to one of the aforementioned claims, **characterized in that** the spring body (7) is formed by an arrangement of at least two spring arms (51, 53), which particularly in the assembled condition of the device extend in a V-arrangement from the carrier (3) towards the inside of the flange ring (5) essentially axially symmetrical with respect to a vertical axis, the vertical axis preferably running through a center of a circle defined by the essentially circular ring shaped inside of the flange ring (5), wherein in particular the arrangement of the spring body (7) additionally includes at least one spring-stopper, wherein preferably at least one spring-stopper is realized between the two spring arms (51, 53) in the acute-angle-space and/or in the above obtuse-angle-space, and/or **in that** the arrangement of the spring body (7) is made of an elastomer piece.

9. Device according to claim 8, **characterized in that** the at least two spring arms (51, 53) each extend essentially perpendicular from an essentially planar support surface of the support section (15), wherein in particular the two support surfaces are each arranged with respect to the vertical axis in an equal angle of inclination, and/or **in that** the at least two spring arms (51, 53) form a radial main direction of extension, the particularly imagined location of cross section of the spring arms (51, 53) lying in the area of a center of a circle, particularly in conjunction therewith, which is defined by the essentially circular ring shape inside of the flange ring (5).

10. Method for manufacturing a device according to one of the above-mentioned claims for elastically mounting an engine, in particular an engine-gearbox-unit, to a motor vehicle body, **characterized in that** the device comprises: a carrier (3), to which the engine is attachable, a rigid flange ring (5) attachable to the motor vehicle frame, and a spring body (7) which elastically supports itself on the carrier (3) and on an inside of the flange ring (5), wherein the carrier (3) and the flange ring (5) are made from plastics, without an intermediate metal layer being arranged between the carrier (3) and/or the flange ring (5) as well as the spring body (7).

## Revendications

1. Dispositif de positionnement élastique d'un moteur, notamment d'une unité de transmission de moteur, sur une carrosserie de véhicule automobile, comprenant un support rigide (3) avec une portion d'appui (15) et une portion de montage (21), sur lequel le moteur peut être fixé, une bague de flasque (5) rigide pouvant être fixée sur la carrosserie de véhicule, qui entoure la portion d'appui (15) sur la totalité de sa circonférence et un corps de ressort (7), qui s'appuie élastiquement sur la portion d'appui (15) du support (3) et sur un côté intérieur de la bague de flasque (5), dans lequel pour une fixation par conjonction de force du corps de ressort (7) sur la bague de flasque (5) et/ou sur la portion d'appui (15) un insert rigide (11) est fixé du côté de la bague de flasque et/ou du corps de support sur le corps de ressort (7), **caractérisé en ce que** l'insert (11) est fixé sur son côté de bague de flasque et/ou sur son côté de support au moyen d'une structure d'ergot sur la bague de flasque (5) et/ou sur le support (3), dans lequel la structure d'ergot est réalisée par au moins une protubérance (77) avec une contre-dépouille sur le côté de bague de flasque et/ou sur le côté de support et par au moins une cavité (37) de forme essentiellement complémentaire à au moins une protubérance respective (77) avec un rétrécissement, dans lequel au moins une protubérance (77) s'engage par l'ergot dans au moins une cavité (37).

2. Dispositif selon la revendication 1, **caractérisé en ce que** la bague de flasque (5) forme une structure annulaire complètement fermée et/ou la bague de flasque (5) est fabriquée, notamment moulée par injection dans un pièce en plastique notamment renforcée par des fibres.

3. Dispositif selon la revendication 1 ou 2, **caractérisé en ce que** la fixation par conjonction de force du corps de ressort (7) sur la bague de flasque (5) et/ou sur le support (3) est réalisée sans une couche intermédiaire en métal.

4. Dispositif selon une des revendications précédentes, **caractérisé en ce que** l'insert rigide (11) est moulé par injection du côté de la bague de flasque et/ou du côté du support sur le corps de ressort (7) notamment par vulcanisation, dans lequel notamment l'insert (11) est fixé sans moyen adhésif sur la bague de flasque (5) et/ou sur le support (3).

5. Dispositif selon une des revendications 1 à 4, **caractérisé en ce que** au moins une protubérance (77) est fabriquée dans un gradin fabriqué à partir d'une pièce comportant l'insert (11), qui s'étend essentiellement en ligne droite axialement par rapport à l'axe de bague de la bague de flasque (5) et/ou présente un section transversale une contre-dépouille et/ou s'étend essentiellement sur la totalité de la largeur axiale de l'insert (11) et/ou la structure d'ergot présente en outre une protubérance annulaire, qui relie les gradins les uns aux autres et/ou est disposée essentiellement dans un milieu axial de la bague de flasque (5) notamment perpendiculairement aux gradins et/ou est formée sans contre-dépouille et/ou est fabriquée à partir d'une pièce comportant l'insert (11).

6. Dispositif selon une des revendications 1 à 5, **caractérisé en ce que** entre les cavités (37) s'étendant essentiellement dans la direction axiale respectivement un enlèvement de matière (47) est réalisé, qui s'étend essentiellement dans la direction axiale et/ou des enlèvements de matière (47) sont disposés sur la totalité de la circonférence de la bague de flasque et sont séparées les uns des autres par des gradins de paroi essentiellement minces, qui s'étendent dans la direction axiale avec une épaisseur de paroi identique, dans lequel l'épaisseur de paroi d'un gradin de paroi est plus petit qu'une dimension de cavité des enlèvements de matière (47) voisins les uns des autres.

7. Dispositif selon une des revendications 1 à 6, **caractérisé en ce que** l'insert (11) forme une forme de portion annulaire notamment circulaire, qui présente une extension circonférentielle de moins de 180°, de préférence plus de 90° et/ou l'insert (11) est formé en plastique et/ou l'insert (11) est moulé par injection autour de la bague de flasque (5) en plastique et/ou du support (3) et/ou l'insert (11) ainsi que la bague de flasque (5) est fabriqué par un procédé de moulage par injection à deux composants.

8. Dispositif selon une des revendications précédentes, **caractérisé en ce que** le corps de ressort (7) est formé par une disposition d'au moins deux bras de ressort (51, 53), qui s'étendent notamment dans l'état monté du dispositif dans une disposition en V à partir du support (3) jusqu'au côté intérieur de a bague de flasque (5) essentiellement symétriquement à un axe vertical, qui s'étendent de préférence à travers un point central du cercle, qui est défini par un côté intérieur essentiellement en forme de bague circulaire de la bague de flasque (5), dans lequel notamment la disposition du corps de ressort (7) présente en outre au moins une butée de ressort, dans lequel de préférence au moins une butée de ressort entre les deux bras de ressort (51, 53) sont prévus dans l'espace angulaire aigu et/ou l'espace angulaire obtus, et/ou la disposition du corps de ressort (7) est fabriquée à partir d'une pièce en élastomère.

9. Dispositif selon la revendication 8, **caractérisé en ce que** au moins deux bras de ressort (51, 53) s'étendent essentiellement à la verticale à partir d'une surface d'appui essentiellement plane de la portion d'appui (15), dans lequel notamment les deux surfaces d'appui sont situées respectivement dans un même angle d'inclinaison par rapport à l'axe vertical et/ou les au moins deux bras de ressort (51, 53) forment une direction d'extension principale radiale, dont notamment un point d'intersection est situé au niveau d'un point de centre de cercle, notamment coïncide avec celui-ci, qui est défini par le côté intérieur essentiellement en forme de bague annulaire de la bague de flasque (5).

10. Procédé de fabrication d'un dispositif, formé selon une des revendications précédentes, de positionnement élastique d'un moteur, notamment d'une unité de transmission de moteur, sur une carrosserie de véhicule automobile, **caractérisé en ce que** le dispositif comprend : un support (3), sur lequel le moteur peut être fixé, une bague de flasque rigide (5) pouvant être fixée sur la carrosserie du véhicule et un corps de ressort (7), qui s'appuie élastiquement sur le support (3) et un côté intérieur de la bague de flasque (5), dans lequel le support (3) et la bague de flasque (5) sont fabriqués dans un plastique, sans disposer une couche intermédiaire en métal entre le support (3) et/ou la bague de flasque (5) ainsi que le corps de ressort (7).
